# NEUE EUROPÄISCHE PATENTSCHRIFT

(11) **EP 1 022 187 B2**
(45) Veröffentlichungstag und Bekanntmachung des Hinweises auf die Entscheidung über den Einspruch: **07.12.2011**
(45) Hinweis auf die Patenterteilung: 12.03.2008
(21) Anmeldenummer: 00100583.4
(22) Anmeldetag: 12.01.2000
(51) Int. Cl.: B60Q 1/26, B60R 1/12, F21V 8/00, F21S 8/10

(54) **Fahrzeugleuchte**
Vehicle light
Feu de véhicule

(30) Priorität: 21.01.1999 DE 19902254
(43) Veröffentlichungstag der Anmeldung: 26.07.2000
(73) Patentinhaber: Truck-Lite Europe GmbH, 99819 Eisenach (DE)
(72) Erfinder: Schwanz, Martina, 99831 Creuzburg (DE); Bräutigam, Markus, 36433 Immelborn (DE); Quendt, Peter, Dr., 99817 Eisenach (DE)
(74) Vertreter: Strasser, Wolfgang

(56) Entgegenhaltungen:
- EP-A- 0 858 932
- DE-A1- 4 129 094
- DE-U1- 29 702 746
- DE-U1- 29 804 489
- US-A- 5 791 757

## Beschreibung

Die Erfindung betrifft eine Fahrzeugleuchte der im Oberbegriff des Anspruches 1 genannten Art.

Ein wesentlicher Teil ist dabei die Lichtaustrittsscheibe, die durch die vorliegende Erfindung weitergebildet werden soll. Bei dieser Lichtaustrittsscheibe handelt es sich um einen flachen Körper aus einem lichtdurchlässigen Material, der eine im eingebauten Zustand außen liegende Hauptfläche, eine dieser gegenüber liegende innere Hauptfläche und Seitenkantenbereiche umfaßt, welche die beiden Hauptflächen miteinander verbinden. Dabei können die Hauptflächen der Lichtaustrittsscheibe prinzipiell in zwei zueinander senkrechten Richtungen gekrümmt sein und in ihrer Draufsicht eine innerhalb weiter Grenzen beliebige Form besitzen. Es wird jedoch davon ausgegangen, daß immer zwei einander gegenüber liegende Seitenkantenbereiche vorhanden sind, von denen der eine zum Einkoppeln des von der wenigstens einen Lichtquelle emittierten Lichtes in die als Lichtleiter wirkende Lichtaüstrittsscheibe dient, die einen Teil dieses Lichts durch Totalreflexion zum gegenüberliegenden Seitenkantenbereich leitet und dort in einen durch geeignete Wahl der Ausrichtung dieses Seitenkantenbereichs definierbaren Raumwinkel abstrahlt, während der von ihr nicht absorbierte Rest des eingekoppelten Lichts durch die äußere Hauptfläche austritt. Die Richtung, welche die beiden eben erwähnten Seitenkantenbereiche der Lichtaustrittsscheibe miteinander verbindet, wird in der vorliegenden Beschreibung als Längsleitrichtung der Lichtaustrittsscheibe bezeichnet.

Eine spezielle Ausführungsform einer solchen Fahrzeugleuchte ist beispielsweise aus EP 0 858 932 A2 bekannt. Dabei handelt es sich um eine Blinkleuchte, die in das Gehäuse eines Außenrückspiegels so eingebaut ist, daß die äußere Hauptfläche der Lichtaustrittsscheibe die Außenfläche des Gehäuses in etwa kontinuierlich fortsetzt. Da in einer solchen Anwendungssituation hinter der Lichtaustrittsscheibe so wenig Platz vorhanden, daß es nicht möglich ist, dort eine Lichtquelle anzuordnen und so mit einem Reflektor zu umgeben, daß das von ihr abgegebene Licht durch die gesamte Fläche der Lichtaustrittsscheibe hindurch in etwa gleichmäßig abgestrahlt wird, kann hier die eingangs beschriebene Lichtleitanordnung in vorteilhafter Weise eingesetzt werden. In diesem Anwendungsfall hat die Lichtaustrittsscheibe eine langgestreckte Form, und die oben definierte Längsleitrichtung fällt mit der sich im eingebauten Zustand im wesentlichen horizontal erstreckenden Längsrichtung der Lichtaustrittsscheibe zusammen.

Damit eine solche Seitenblinkleuchte nicht nur von vom, d.h. mit Blickrichtung entgegen der Fahrtrichtung des Fahrzeuges sondern auch von der Seite her wahrgenommen werden kann, ist die langgestreckte Lichtaustrittsscheibe von oben her gesehen so gekrümmt, daß die Vertikalebenen, in denen ihre kurzen Stirnkanten verlaufen, einen Winkel von ca 60° miteinander einschließen. In den senkrecht zur Längsrichtung verlaufenden Schnitten ist die Lichtaustrittsscheibe dieser bekannten Fahrzeugleuchte jedoch praktisch nur wenig gekrümmt.

Versucht man, diese Krümmung zu verstärken, was zur Verbesserung der Anpassungsmöglichkeiten an entsprechende Gehäuse- bzw. Karosseriekonturen wünschenswert ist, so zeigt sich, daß bei einer Fahrzeugleuchte, die als Seitenblinkleuchte so angeordnet ist, daß sich ihre Längsleitrichtung im wesentlichen horizontal erstreckt, ihre Sichtbarkeit bzw. Wahrnehmbarkeit aus den vor und schräg vor dem betreffenden Fahrzeug befindlichen Raumbereichen mit einer der Fahrtrichtung genau oder schräg entgegengesetzten, im wesentlichen horizontalen Blickrichtung erheblich vermindert.

Um dies zu vermeiden, kann man somit entweder in Querrichtung nur wenig gekrümmte Lichtaustrittsscheiben verwenden, wie sie aus der oben genannten EP 0 858 932 A2 bekannt sind, oder mehr und/oder stärkere Lampen, beispielsweise Leuchtdioden, verwenden.

Ersteres schränkt die Gestaltungsmöglichkeiten für derartige Fahrzeugleuchten in starkem Maße ein, während durch den zweiten Lösungsansatz der Aufbau einer solchen Leuchte komplizierter wird und ihre Herstellungskosten steigen.

Demgegenüber liegt der Erfindung die Aufgabe zugrunde, eine Fahrzeugleuchte der eingangs genannten Art so weiterzubilden, daß auch bei einer in Querrichtung stark gekrümmten Lichtaustrittsscheiben-Geometrie eine gute Sichtbarkeit erhalten bleibt ohne daß die Anzahl der Leuchtdioden vermehrt werden muß und/oder weniger lichtstärkere Leuchtdioden verwendet werden müssen.

Zur Lösung dieser Aufgabe sieht die Erfindung die im Anspruch 1 zusammengefaßten Merkmale vor.

Diesen Maßnahmen liegt die Erkenntnis zugrunde, daß dann, wenn die Lichtaustrittsscheibe auch in Querrichtung stärker gekrümmt wird, ohne daß zusätzliche Maßnahmen ergriffen werden, die Ablenkung des durch ihre äußere Hauptfläche austretenden Lichts stark vergrößert wird, so daß sich die Helligkeit des in den gewünschten Winkelbereich abgegebenen Lichtes entsprechend vermindert. Bei einer Seitenblinkleuchte, bei der sich die Längsleitrichtung der Lichtaustrittsscheibe im wesentlichen horizontal erstreckt, bedeutet dies, daß je nach Krümmung ein erheblicher Teil des austretenden Lichts vertikal nach oben bzw. unten abgestrahlt wird und somit nicht zur Wahrnehmbarkeit der Seitenblinkleuchte in horizontaler Richtung beiträgt.

Dadurch, daß gemäß der Erfindung die innere Hauptfläche der Lichtaustrittsscheibe mit einer optischen Struktur versehen wird, die das durch die äußere Hauptfläche austretende Licht in einer Vorzugsrichtung bündelt, wird ohne Vergrößerung des Raumbedarfs und der Herstellungskosten eine in der gewünschten Vorzugsrichtung deutlich erhöhte Lichtausbeute erzielt, so daß die Anzahl und/oder Stärke der verwendeten Lichtquellen vermindert werden kann. Gleichzeitig kann die Lichtaustrittsscheibe in allen Richtung wesentlich stärker als bisher gekrümmt sein, so daß sie an die Form bzw. Außenkontur beliebiger Fahrzeugteile angepaßt werden kann. Den gestalterischen Möglichkeiten sind somit wesentlich weniger Grenzen gesetzt, als dies beim Stand der Technik der Fall ist.

Die optisch wirksame Struktur an der inneren Hauptfläche der Lichtaustrittsscheibe wird dabei so gestaltet, daß bei sich im wesentlichen horizontal erstreckender Längsleitrichtung das Licht in vertikaler Richtung gebündelt wird, so daß es im wesentlichen in horizontaler Richtung austritt.

Die auf der innere Hauptfläche der Lichtaustrittsscheibe vorgesehene optisch wirksame Struktur wird von einer Reihe von streifenförmigen, jeweils einer der Lichtquellen zugeordneten Bereichen gebildet, die in Querrichtung nebeneinander angeordnet sind und sich zueinander parallel in der Längsleitrichtung erstrecken; dabei ist jeder dieser Bereiche gegen den ihm unmittelbar gegenüberliegenden Bereich der äußeren Hauptfläche in nicht paralleler Weise verkippt angeordnet.

Ein besonderer Vorteil dieser Anordnung besteht darin, daß die Lichtmenge, die bis zu der der Einkoppelseite gegenüberliegenden Stirnkante gelangt und dort austreten kann, durch die erfindungsgemäße, optisch wirksame Struktur deutlich vergrößert wird.

Um diesen erhöhten Lichtstrom optimal zu nutzen, ist gemäß einer besonders bevorzugten Ausführungsform an der der Einkoppelseite gegenüberliegenden Seite der Lichtaustrittsscheibe eine zusätzliche Auskoppelfläche vorgesehen, die sich im montierten Zustand im Wesentlichen in vertikaler Richtung erstreckt und zum Fahrzeug hin verkippt angeordnet ist. Dadurch wird eine deutliche Verbesserung der Sichtbarkeit der Seitenblinkleuchte von in Fahrtrichtung gesehen schräg hinten erzielt.

Wenn die Krümmung der Lichtaustrittsscheibe in Querrichtung ungleichförmig ist, so sind die streifenförmigen Bereiche in Abhängigkeit von der Größe dieser Krümmung unterschiedlich stark verkippt

Diese und weitere vorteilhafte Ausgestaltungen der erfindungsgemäßen Fahrzeugleuchte sind in den Unteransprüchen niedergelegt.

Die Erfindung wird im folgenden anhand eines Ausführungsbeispiels unter Bezugnahme auf die Zeichnung beschrieben; in dieser zeigen:
- Fig. 1: eine teilweise geschnittene Draufsicht auf einen rechten Fahrzeugaußenspiegel, in dessen Gehäuse eine erfindungsgemäße Seitenblinkleuchte eingebaut ist,
- Fig. 2: eine der Fig. 1 entsprechende Ansicht der Seitenblinkleuchte aus Fig. 1 in vergrößertem Maßstab, und
- Fig. 3: einen Schnitt längs der Linie A-A durch die Seitenblinkleuchte aus Fig. 2.

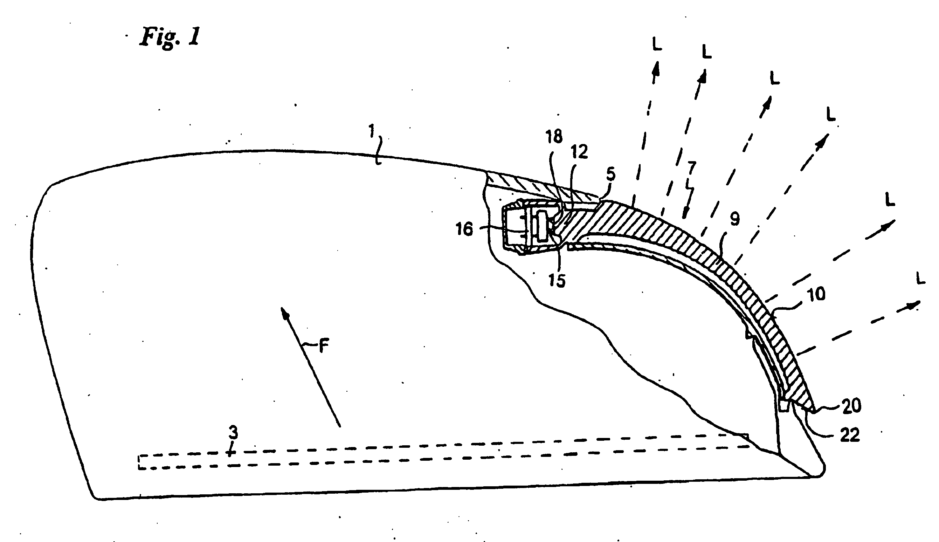

In Fig. 1 ist das Gehäuse 1 eines Fahrzeugaußenspiegefs in schematischer Weise von oben gesehen so dargestellt, wie es sich im montierten Zustand von dem links befindlichen, nicht dargestellten Fahrzeug ausgehend nach rechts erstreckt.

Im Bereich der in Fig. 1 unteren Gehäuseseite ist im Inneren des Gehäuses 1 ein verstellbarer Spiegel 3 angeordnet, der durch strichpunktierte Linien schematisch angedeutet ist. Der Pfeil F gibt dabei die Vorwärtsfahrtrichtung des Fahrzeuges wieder.

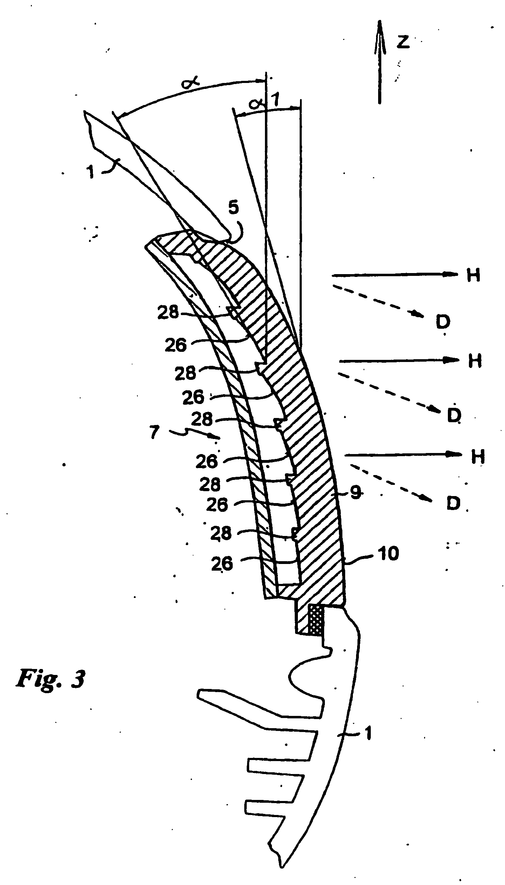

In eine Ausnehmung 5 des Gehäuses 1 ist eine gemäß der Erfindung aufgebaute Seitenblinkleuchte 7 eingesetzt, von der nur die zum Verständnis der Erfindung relevanten Bestandteile dargestellt sind. Hierzu gehört eine Lichtaustrittsscheibe 9, die so geformt ist, daß ihre äußere Hauptfläche 10 die Außenkontur des Gehäuses 1 im Bereich der durch die Lichtaustrittsseheibe 9 abgedeckten Ausnehmung 5 nahezu kontinuierlich fortsetzt. Dies gilt sowohl für die zum Schnitt der Fig. 1 parallelen als auch die hierzu senkrechten Ebenen (Fig. 3)

Im Bereich der in Fig. 1 kurzen Stirnseite 12 der Lichtaustrittsscheibe 9 sind mehrere, senkrecht zur Zeichenebene der Fig. 1 übereinander angeordnete Leuchtdioden 15 vorgesehen, von denen in Fig. 1 nur eine wiedergegeben ist. Diese Leuchtdioden sind auf einer Trägerplatine 16 montiert, über die ihre schaltbare Stromversorgung erfolgt.

In die kurze Stirnseite 12 der Lichtaustrittsscheibe 9 ist eine sich in Längsrichtung dieser kurzen Stirnseite 12 erstreckende Vertiefung 18 eingearbeitet, in welche die das Licht abgebenden Gehäuseteile der Leuchtdioden 15 hineinragen. Somit dient diese Vertiefung 18 als Einkoppelstelle, durch die das von den Leuchtdioden 15 abgegebene Licht in die als Lichtleiter dienende Lichtaustrittsscheibe 9 eintritt. Ein Teil dieses Lichtes folgt dem gekrümmten Verlauf der Lichtaustrittsscheibe 9 bis zur der der Einkoppelseite gegenüberliegenden kurzen Stirnseite 20, an welcher er wieder austritt. Der von der Lichtaustrittsscheibe 9 überdeckte Bogen entspricht in etwa einem Winkel von 90°, so daß das von den Leuchtdioden 15 im wesentlichen quer zur Fahrtrichtung F abgegebene Licht an der Stirnseite 20 im wesentlichen in Fahrtrichtung gesehen nach schräg hinten austritt.

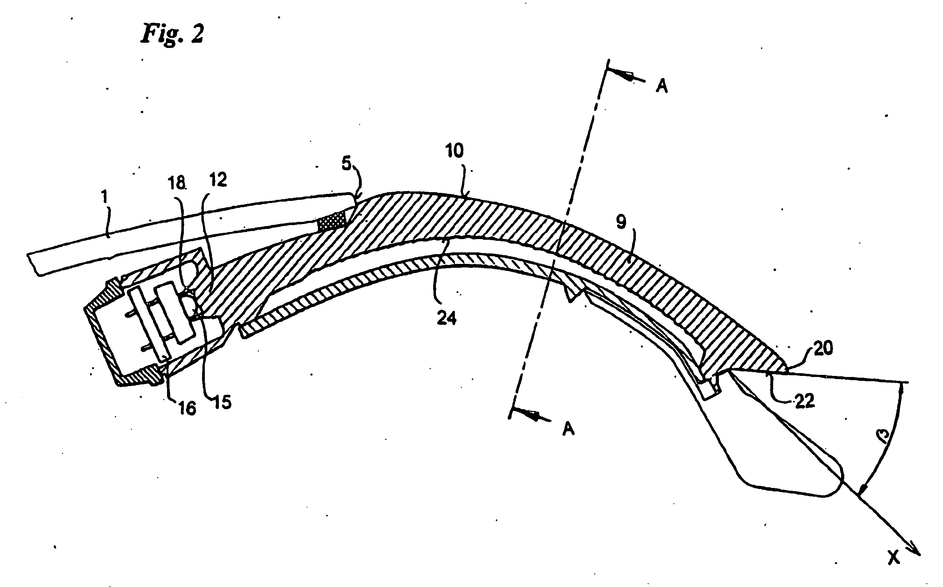

Vorzugsweise weist die Stirnseite 20 eine Auskoppelfläche 22 auf, die sich im montierten Zustand in vertikaler Richtung erstreckt und im Schnitt der Fig. 1 und 2 mit der horizontalen Tangente, die im Bereich der kurzen Stirnseite 20 an die Krümmung der Lichtaustrittsscheibe 9 angelegt werden kann, einen von 90° verschiedenen Winkel einschließt, d.h. zum Fahrzeug hin verkippt ist. Dabei steht diese Auskoppelfläche 22 geringfügig über die Außenkontur des Spiegelgehäuses vor. Auf diese Weise wird erreicht, daß eine Lichtabstrahlung in einem Winkelbereich β möglich ist, der ausgehend von der der Fahrtrichtung F (Fig. 1) entgegengesetzten Richtung X (Fig. 2) einen Wert von 5° bis 20° aufweisen kann.

Ein weiterer Teil des von den Leuchtdioden 15 abgegebenen und in die Lichtaustrittsscheibe 9 eingekoppelten Lichts tritt durch die äußere Hauptfläche 10 der Lichtaustrittsscheibe 9 aus, wie dies die Pfeile L in Fig. 1 zeigen

Dieses Licht wird also mit kontinuierlichem Übergang von einer zur Fahrtrichtung nahezu parallelen bis zu einer zur Fahrtrichtung nahezu entgegen gerichteten Richtung abgestrahlt.

In den zur Schnittebene der Fig. 1 und 2 parallelen Ebenen verläuft die innere Hauptfläche 24 der Lichtaustrittsscheibe 9 mit einer Krümmung, die in etwa der Krümmung der äußeren Hauptfläche 10 entspricht.

Würde dies auch für die Krümmung der inneren Hauptfläche 24 in den zur Schnittebene der Fig. 1 und 2 senkrechten Ebenen, von denen eine in Fig. 3 dargestellt ist, zutreffen, so würde ein großer Teil des durch die äußere Hauptfläche 10 austretenden Lichtes entgegen der Richtung des Pfeiles Z in Fig. 3, d.h. bei der hier angenommenen Einbaulage nach unten austreten und damit nicht zu der für eine Seitenblinkleuchte geforderte Lichtabstrahlung in horizontaler Richtung beitragen, wie dies durch die gestrichelten Pfeile D angedeutet ist.

Um diese Lichtverluste zu vermeiden, ist daher gemäß der Erfindung die Innenseite 24 der Lichtaustrittsscheibe 9 mit einer optisch wirksamen Struktur versehen, die aus einer der Anzahl der Leuchtdioden entsprechenden Vielzahl von streifenförmigen Bereichen 26 besteht, die sich in der Längsleitrichtung der Lichtaustrittsscheibe 9 zueinander parallel erstrecken und in der Ebene der Fig. 3 geradlinig oder nur leicht gekrümmt und so angeordnet sind, daß ihre Richtung in dieser Ebene, die bei gekrümmten Bereichen 26 durch die Richtung der Tangente an diese Krümmung zu ersetzen ist, gegen die Richtung Z um einen Winkel α geneigt ist, der größer ist als der Winkel α₁, der die an den entsprechenden Bereich der äußeren Hauptfläche 10 angelegte Tangente mit der Richtung Z einschließt. Dabei ist die Differenz der Winkel α zum jeweiligen Winkel α₁ von der Krümmung des gegenüberliegenden Bereichs der äußeren Hauptfläche 10 in der jeweiligen Schnittebene abhängig, und ist vorzugsweise um so größer je größer diese Krümmung ist.

Zur besseren Abgrenzung können die streifenförmigen Bereiche 26 durch Stege 28 voneinander getrennt sein, die sich zueinander parallel in Längsrichtung der Lichtaustrittsscheibe 9 erstrecken. Außerdem kann jeder der Bereiche 26 eine zu seiner Längsrichtung senkrechte Riffelung aufweisen, um eine gleichmäßigere Streuung des zur äußeren Hauptfläche 10 hin reflektierten und durch diese austretenden Lichts zu erzielen.

Bei dem in den Fig. 1 bis 3 gezeigten Ausführungsbeispiel sind die streifenförmigen Bereiche 26 so geneigt, daß sie Licht, das ansonsten in zu starkem Maße nach unten austreten würde, zur Horizontalen H hin bündeln, wie dies für Seitenblinkleuchten wünschenswert ist.

Für andere Anwendungsfälle kann die Neigungsdifferenz α-α₁ der streifenförmigen Bereiche aber auch so gewählt werden, daß eine in Richtung des Pfeiles Z verstärkte Lichtabstrahlung erfolgt, wenn dies gewünscht wird, wobei dann je nach Einbaulage der betreffenden Fahrzeugleuchte die Richtung dieses Pfeiles Z auch eine andere als die senkrecht nach oben sein kann.

## Patentansprüche

1. Fahrzeugleuchte (7), die als Seitenblinkleuchte ausgebildet ist, deren Lichtaustrittsöffnung (5) durch eine lichtdurchlässige, sich im montierten Zustand mit ihrer Längsleitrichtung im wesentlichen horizontal erstreckende, quer zur Längsleitrichtung gekrümmte Lichtaustrittsscheibe (9) abgedeckt ist, die das von mehreren, an einem ihrer Seitenkantenbereiche quer zur Längsleitrichtung nebeneinander angeordneten Lichtquellen (15) abgegebene Licht in Längsleitrichtung so leitet, dass ein Teil hiervon zu einem dem Einkoppelbereich gegenüberliegenden Seitenkantenbereich (20) gelangt und ein weiterer Teil dieses Lichtes durch die äußere Hauptfläche (10) der Lichtaustrittsscheibe (9) abgestrahlt wird, wobei die Lichtaustrittsscheibe (9) an ihrer inneren Hauptfläche (24) eine optisch wirksame Struktur (26,..., 26) aufweist, **dadurch gekennzeichnet, dass** die optisch wirksame Struktur (26,..., 26) eine Reihe von streifenförmigen Bereichen (26) der inneren Hauptfläche (24) der Lichtaustrittsscheibe (9) umfasst, von denen jeder jeweils einer der Lichtquellen (15) zugeordnet ist, wobei sich diese streifenförmigen Bereiche (26) zueinander parallel in Längsleitrichtung der Lichtaustrittsscheibe (9) erstrecken und jeder von ihnen gegen den ihm unmittelbar gegenüberliegenden Bereich der äußeren Hauptfläche (10) in nicht paralleler Weise so verkippt ist, dass das Ausmaß (α) der Verkippung in Abhängigkeit von der Krümmung quer zur Längsleitrichtung des zugehörigen Bereichs der äußeren Hauptfläche (10) von Bereich (26) zu Bereich (26) verschieden ist, sodass die optisch wirksame Struktur (26,..., 26) das von den Lichtquellen (15) kommende Licht derart beeinflusst, dass das durch die äußere Hauptfläche (10) austretende Licht in den zur Längsleitrichtung senkrechten Querschnitten in einen in vertikaler Richtung eingeschränkten Bereich hinein gebündelt wird, der eine sich im wesentlichen horizontal erstreckende Zentralebene aufweist.

2. Fahrzeugleuchte nach Anspruch 1, **dadurch gekennzeichnet, dass** die Verkippung umso stärker ist, je stärker der jeweils zugehörige Bereich der äußeren Hauptfläche (10) quer zur Längsrichtung gekrümmt ist.

3. Fahrzeugleuchte nach Anspruch 1 oder 2, **dadurch gekennzeichnet, dass** die streifenförmigen Bereiche (26) der inneren Hauptfläche (24) der Lichtaustrittsscheibe (9) durch Stege (28) voneinander getrennt sind, die sich in Längsleitrichtung der Lichtaustrittsscheibe (9) erstrecken.

4. Fahrzeugleuchte nach einem der vorhergehenden Ansprüche, **dadurch gekennzeichnet, dass** sie in einem Ausschnitt des Gehäuses (1) eines Fahrzeugaußenspiegels (3) angeordnet ist.

5. Fahrzeugleuchte nach einem der vorhergehenden Ansprüche, **dadurch gekennzeichnet, dass** wenigstens eine Lichtquelle (15) eine Leuchtdiode ist.

6. Fahrzeugleuchte nach Anspruch 5, **dadurch gekennzeichnet, dass** an dem betreffenden Seitenkantenbereich (12) der Lichtaustrittsscheibe (9) eine Einkoppelstelle in Form einer Vertiefung (18) ausgebildet ist, in welche die Lichtquelle (15) hineinragt.

7. Fahrzeugleuchte nach einem der vorhergehenden Ansprüche, **dadurch gekennzeichnet, dass** die optisch wirksame Struktur (26,..., 26) so ausgebildet ist, dass ein erhöhter Anteil des an dem einen Seitenkantenbereich eingekoppelten Lichts zu dem gegenüberliegenden Seitenkantenbereich (20) weitergeleitet und dort beim Austreten in einen bevorzugten Winkelbereich hinein gebündelt wird und dass an dem der Einkoppelseite gegenüberliegenden Seitenkantenbereich (20) eine Auskoppelfläche (22) vorgesehen ist, die für eine Lichtabstrahlung in einen bevorzugten Winkelbereich (β) ausgerichtet ist.

8. Fahrzeugleuchte nach Anspruch 7, **dadurch gekennzeichnet, dass** die Auskoppelfläche (22) gegen die zur Längsleitrichtung der Lichtaustrittsscheibe (9) senkrechte Ebene so geneigt ist, dass die innere und die äußere Hauptfläche (24, 10) der Lichtaustrittsscheibe (9) in Längsleitrichtung unterschiedlich lang sind.

9. Fahrzeugleuchte nach Anspruch 8, **dadurch gekennzeichnet, dass** die Auskoppelfläche (22) gegen die zur Längsleitrichtung der Lichtaustrittsscheibe (9) senkrechte Ebene so geneigt ist, dass die innere Hauptfläche (24) der Lichtaustrittsscheibe (9) in Längsleitrichtung kürzer ist als die äußere Hauptfläche (10).

## Claims

1. A vehicle lamp (7) which is a side flashing lamp whose light exit opening (5) is covered by a translucent light exit lens (9) which is curved transversely with respect to its longitudinal guide direction and which, in the assembled condition, extends with this longitudinal guide direction substantially horizontally and guides the light emitted by several light sources (14) which are arranged at one of its narrow end edges in said longitudinal guide direction in such a manner that a part thereof reaches the narrow end edge (20) in opposite relationship to the coupling-in side while a further part of said light is irradiated through the outer main surface (10) of the light exit lens (9), said light exit lens (9) having an optically effective structure (26,... ,26) at its inner main surface (24), **characterised in that** the optically effective structure (26,..., 26) comprises a series of strip-shaped regions (26) of the inner main surface (24) of the light exit lens (9), each of said strip-shaped regions being associated with one of said light sources (15), said strip-shaped regions (26) extending parallel to each other in the longitudinal guide direction of the light exit lens (9) and each of which being tilted in non-parallel relationship relative to the region of the outer main surface (10), which is immediately opposite to it in such a manner that the extent (α) of the tilt is different from one region (26) to another (26) in dependence on the curvature transversely with respect to longitudinal direction of the associated region of the outer main surface (10) whereby the optically effective structure (26,..., 26) influences the light coming from said light sources (15) in such a manner that the light exiting through the outside main surface (10), in the cross-sections which are perpendicular to the longitudinal guide direction, is focussed into a region which is restricted in a vertical direction and has a substantially horizontally extending central plane..

2. A vehicle lamp as set forth in claim 1 **characterised in that** the tilt increases in proportion to an increasing curvature of the associated region of the outer main surface (10) transversely with respect to the longitudinal direction.

3. A vehicle lamp as set forth in claim1 or 2 **characterised in that** the strip-shaped regions (26) of the inner main surface (24) of the light exit lens (9) are separated from each other by lands (28) which extend in the longitudinal guide direction of the light exit lens (9).

4. A vehicle lamp as set forth in one of the preceding claims **characterised in that** it is arranged in an aperture in the housing (1) of a vehicle external mirror (3).

5. A vehicle lamp as set forth in one of the preceding claims **characterised in that** the at least one of the light sources (15) is a light emitting diode.

6. A vehicle lamp as set forth in claim 5 **characterised in that** a coupling-in location in the form of a depression (18) into which the light source (15) projects is provided at the relevant narrow end edge (12) of the light exit lens (9).

7. A vehicle lamp as set forth in one of the preceding claims **characterised in that** the optically effective structure (26,..., 26) is designed in such a way that an increased part of the light which coupled in at the one narrow end edge is guided to the opposite narrow end edge where it is focussed into a preferred angular range when exiting said light exit lens and **in that** provided at the narrow end edge (20) opposite to the coupling-in side a coupling-out surface (22) is provided which is arranged to achieve light irradiation into a preferred solid angle range (β).

8. A vehicle lamp as set forth in claim 7 **characterised in that** the coupling-out surface (22) is so inclined relative to the plane perpendicular to the longitudinal guide direction of the light exit lens (9) that the inner and outer main surfaces (24, 10) of the light exit lens (9) are of different lengths in the longitudinal guide direction.

9. A vehicle lamp as set forth in claim 8 **characterised in that** the coupling-out surface (22) is so inclined relative to the plane perpendicular to the longitudinal guide direction of the light exit lens (9) that the inner main surface (24) of the light exit lens (9) is shorter in the longitudinal direction than the outer main surface (10).

## Revendications

1. Optique de véhicule (7), qui est un clignotant latéral, dont l'orifice de sortie de lumière (5) est recouvert par une plaque de sortie de la lumière (9) translucide, qui est recourbée à la transversalement par rapport à sa direction longitudinale de guidage et qui, lorsqu'elle est montée, s'étende sensiblement à l'horizontale par sa direction longitudinale de guidage et dirige de la lumière restituée par plusieurs sources lumineuses (15) disposées côte à côte transversalement à la direction longitudinale de guidage sur l'une de ses zones d'arêtes d'extrémité dans la direction longitudinale de guidage, de sorte qu'une partie de ladite lumière arrive dans une zone d'arête latérale (20) opposée à la zone d'injection et qu'une autre partie de ladite lumière soit rayonnée par la surface principale extérieure (10) de la plaque de sortie de lumière (9), et qui sur sa surface principale (24) intérieure comporte une structure optiquement active (26,..., 26), **caractérisée en ce que** la structure optiquement active comprend une série de zones en forme de bandes (26) de la surface principale intérieure (24) de la plaque de sortie de lumière (9), à chacune desquelles est associée l'une des sources lumineuses (15), ces zones en forme de bandes (26) s'étendant parallèlement l'une à l'autre, en direction longitudinale de guidage de la plaque de sortie de lumière (9), et **en ce que** chacune d'elles est inclinée de manière non parallèle par rapport à la zone qui lui est directement opposée de la surface principale extérieure (10), de sorte que la grandeur (α) de l'inclinaison est différente de zone (26), en zone (26), en fonction de la courbure transversalement à la direction longitudinale de guidage de la zone correspondante de la surface principale extérieure (10), de sorte que la structure optiquement active (26,..., 26) influence la lumière arrivant des sources lumineuses (15) de sorte que, dans les sections transversales perpendiculaires à la direction longitudinale de guidage, la lumière sortant de la surface principale extérieure (10) soit focalisée à l'intérieur d'une zone restreinte en direction verticale préférentielle, qui comporte un plan central s'étendant sensiblement à l'horizontale.

2. Optique de véhicule selon la revendication 1, **caractérisé en ce que** l'inclinaison est d'autant plus importante que la zone respectivement correspondante de la surface principale extérieure (10) est fortement recourbée transversalement à la direction longitudinale.

3. Optique de véhicule selon la revendication 1 ou 2, **caractérisée en ce que** les zones en forme de bandes (26) de la surface principale intérieure (24) de la plaque de sortie de lumière (9) sont séparées les unes des autres par des barrettes (28) qui s'étendent en direction longitudinale de guidage de la plaque de sortie de lumière (9).

4. Optique de véhicule selon l'une quelconque des revendications précédentes, **caractérisée en ce qu'**elle est disposée dans une découpe du boîtier (1) d'un rétroviseur extérieur de véhicule (3).

5. Optique de véhicule selon l'une quelconque des revendications précédentes, **caractérisée en ce que** au moins une source lumineuse (15) est une diode électroluminescente.

6. Optique de véhicule selon la revendication 5, **caractérisée en ce que** sur la zone d'arête latérale (12) concernée de la plaque de sortie de lumière (9) est conçue une zone d'injection sous la forme d'un creux (18), dans lequel pénètre la source lumineuse (15).

7. Optique de véhicule selon l'une quelconque des revendications précédentes, **caractérisé en ce que** la structure optiquement active (26,..., 26) est conçue de sorte à ce qu'une plus grande partie de la lumière injectée dans la zone d'arête latérale soit retransmise vers la zone d'arête latérale opposée (20) et qu'elle y soit, lors de sa sortie, focalisée à l'intérieur d'une zone angulaire préférentielle et que sur la zone d'arête latérale (20) opposée au côté d'injection est prévue une surface de sortie (22) qui est orientée pour un rayonnement de la lumière dans une zone angulaire préférentielle (ß)..

8. Optique de véhicule selon la revendication 7, **caractérisée en ce que** la surface de sortie (22) est inclinée vers le plan perpendiculaire à la direction longitudinale de guidage de la plaque de sortie de lumière (9), de sorte que les surfaces principales intérieure et extérieure (24, 10) de la plaque de sortie de la lumière (9) aient une longueur différente en direction longitudinale de guidage.

9. Optique de véhicule selon la revendication 8, **caractérisée en ce que** la surface de sortie (22) est inclinée vers le plan perpendiculaire à la direction longitudinale de guidage de la plaque de sortie de lumière (9), de sorte que la surface principale intérieure (24) de la plaque de sortie de lumière (9) soit plus courte en direction longitudinale de guidage que la surface principale extérieure (10).
